# EUROPEAN PATENT APPLICATION

(11) **EP 1 531 220 A1**
(43) Date of publication of application: **18.05.2005**
(21) Application number: 04026695.9
(22) Date of filing: 10.11.2004
(51) Int. Cl.: E05B 65/36, E05F 15/16, B60H 1/24, B60R 25/00, G07C 9/00

(54) **Keyless entry system**

(30) Priority: 11.11.2003 JP 2003381234
(71) Applicant: ALPS ELECTRIC CO., LTD., Ota-ku Tokyo (JP)
(72) Inventor: Ikeda, Koji, Ota-KU, Tokyo (JP)
(74) Representative: Klunker . Schmitt-Nilson . Hirsch

(57) **Abstract**

There is provided a keyless entry system with improved convenience, which can perform automatic locking of doors and automatic ventilation of inside of a vehicle. The keyless entry system comprises an onboard device 1, and a portable device 2 which performs radio communication with the onboard device 1. The onboard device 1 includes a door lock mechanism 12, a power window mechanism 13, and an ECU 16. The portable device 2 includes a memory 22 for storing setting information for closing mode and opening modes (first and second modes) of a window, and a mode selection switch 23 for selecting either the opening mode or closing mode and changing the setting information in the memory 22 according to the selected mode. On the basis of an answer signal b3 from the portable device 2, the ECU 16 automatically locks the door, drives the window and stops the window at its predetermined position based on the setting information stored in the memory 22.

## Description

### BACKGROUND OF THE INVENTION

### 1. Field of the Invention

The present invention relates to a keyless entry system for controlling locking/unlocking operation of automobile doors, etc., and more particularly, to a keyless entry system in which the operation of a power window mechanism is interlocked with the operation of a door lock mechanism.

### 2. Description of the Related Art

Conventionally, as an example of keyless entry system of such type, the following passive type keyless entry system (for example, see USP 6542071) is known. The passive keyless entry system commonly has an onboard device mounted on a vehicle, and a portable device which performs radio communication with the onboard device. The onboard device has a door lock mechanism which performs locking/unlocking operation of doors, and a power window mechanism which performs opening/closing of windows, and a microcomputer for controlling the door lock mechanism and the power window mechanism. Typically, on the basis of a locking/unlocking request signal of the door from the portable device authenticated by the onboard device, the microcomputer controls the door lock mechanism to be operated, thereby performing the locking/unlocking operation of doors, and controls the power window mechanism to be operated interlockingly with the locking/unlocking operation.

In the passive keyless entry system constructed as described above, when a user possessing the portable device leaves from the vehicle, and if doors are unlocked, the door lock mechanism is operated to automatically lock the doors, and if windows are opened, the power window mechanism is operated to automatically drive the windows into their fully closed state

In the above-mentioned conventional passive type keyless entry system, when a user possessing the portable device leaves the vehicle, the doors are automatically locked and the windows are automatically closed. Thus, articles in the vehicle room are safe from theft. On the other hand, for example, when the user parks his/her vehicle under the scorching sun in the summer, a problem occurs that the inside of the vehicle is not ventilated, and the temperature in the vehicle may get exceedingly too high. Meanwhile, if the user switches over the opening/closing operation of windows by the power window mechanism to a manual mode, manually operates to stop the windows with an appropriate gap left, and then automatically lock the doors, the inside of the vehicle can be sufficiently ventilated. In this case, however, the user should manually operate the opening/closing of windows. Therefore, another problems may occur that the operation becomes complicated, causing inconvenience to the user.

### SUMMERY OF THE INVENTION

The present invention has been made in consideration of the above conventional problems. An object of the present invention is to provide a keyless entry system with improved convenience, which can perform automatic locking of doors and automatic ventilation of inside of a vehicle.

In order to achieve the above object, the present invention provides a keyless entry system which comprises an onboard device mounted on a vehicle, and a portable device which performs radio communication with the onboard device. The onboard device includes a door lock mechanism which performs locking/unlocking of a door, a power window mechanism which performs opening/closing of a window, and control means for controlling the door lock mechanism and the power window mechanism. Either the onboard device or the portable device includes memory means for storing setting information for an opening mode of the window in which the window is left open with a predetermined gap. On the basis of a predetermined signal from the portable device authenticated by the onboard device, the control means controls the door lock mechanism to be operated to lock the door, and controls the power window mechanism to be operated to drive and stop the window at its predetermined position based on the setting information stored in the memory.

According to the keyless entry system constructed described above, doors can be automatically locked, and windows can be automatically left open with a predetermined gap. For example, even when a user parks his/her vehicle under the scorching sun in the summer, the inside of the vehicle can be ventilated without the need to manually open the windows. This makes it possible to realize a passive keyless entry system having improved convenience, which can prevent the temperature in the vehicle from getting exceedingly high.

Further, in the above construction, preferably, setting information for a closing mode in which the window is fully closed is stored in the memory means, either the onboard device or the portable device has selection means for selecting either the opening mode or the closing mode, and the control means stops windows at its predetermined position based on the setting information for the mode selected by the selection means. When such construction is employed, when there is no need for ventilation, windows can be set to be their fully closed states, so that it is possible to realize a keyless entry system with improved convenience.

Further, in the above construction, preferably, the opening mode has a plurality of modes in which the gap distances of the window are different from each other, and selection means for selecting any one of the plurality of modes is further included. When such construction is employed, for example, a mode in which the gap distance of a window is short is used as the first mode or a mode in which the gap distance of a window is relatively long is used as the second mode. As a result, when a user intends to park his/her vehicle in a place where it is assumed that vehicle thefts occasionally occur, the first mode is selected, so that the ventilation in the vehicle can be performed while the articles in the vehicle can be safe from theft. Further, when the user intends to park his/her vehicle in a place where a vehicle theft rarely occur, the second mode is selected, the ventilation in the vehicle can be more efficiently performed while maintaining an anti-theft effect to a certain extent. Thus, it is possible to realize a passive keyless entry system with improved convenience.

In the keyless entry system according to the present invention, doors can be automatically locked, and windows can be automatically left open with a predetermined gap. Thus, for example, even when a user parks his/her vehicle under the scorching sun in the summer, ventilation in a vehicle room can be performed without the need to manually open the windows. This makes it possible to realize a passive keyless entry system with improved convenience, which can prevent the temperature of inside of a vehicle from getting exceedingly high.

### BRIEF DESCRIPTION OF THE DRAWINGS

Fig. 1 is a block diagram illustrating the construction of essential parts of a passive keyless entry system according to an embodiment of the present invention;
Fig. 2 is an explanatory view of a radio signal transmitted and received between a portable device and an onboard device, which are provided in the passive keyless entry system;
Fig. 3 is a flowchart for explaining door lock control and a first mode operation of a window, in the passive keyless entry system;
Fig. 4 is a flowchart for explaining a second mode operation of a window in the passive keyless entry system; and
Fig. 5 is a flowchart for explaining a closing mode operation of a window in the passive keyless entry system.

### DESCRIPTION OF THE PREFERRED EMBODIMENT

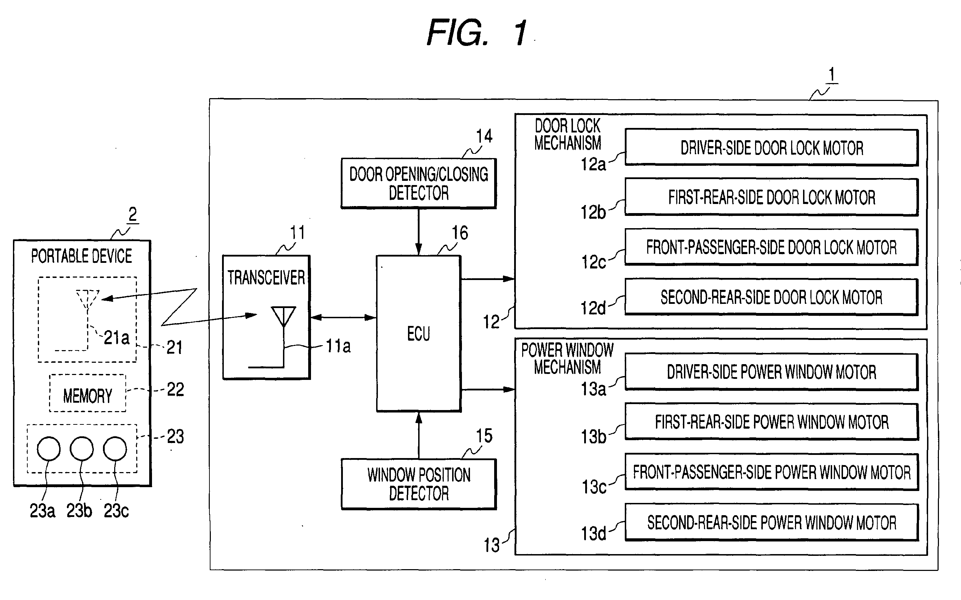

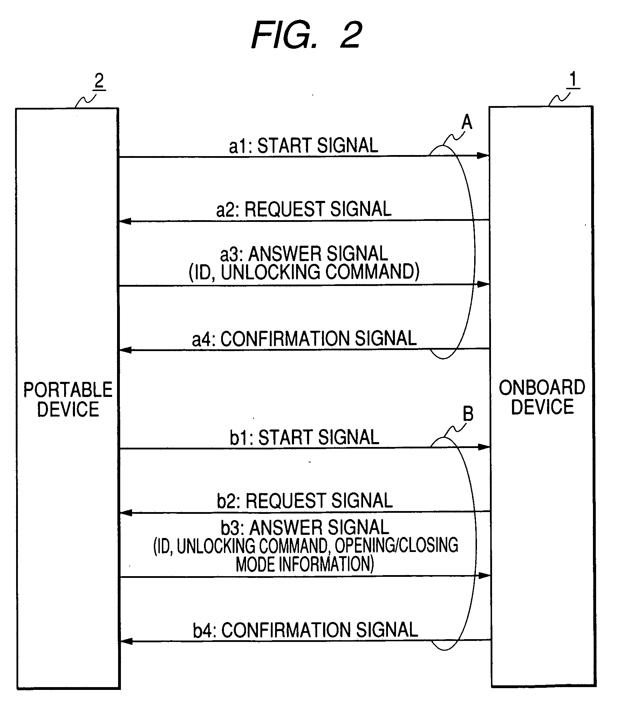

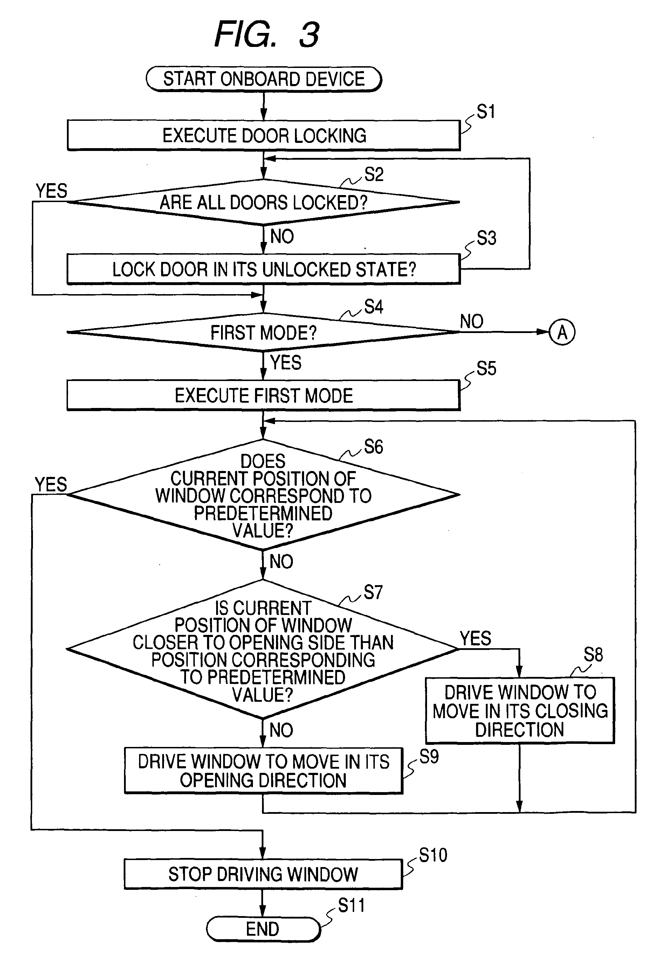

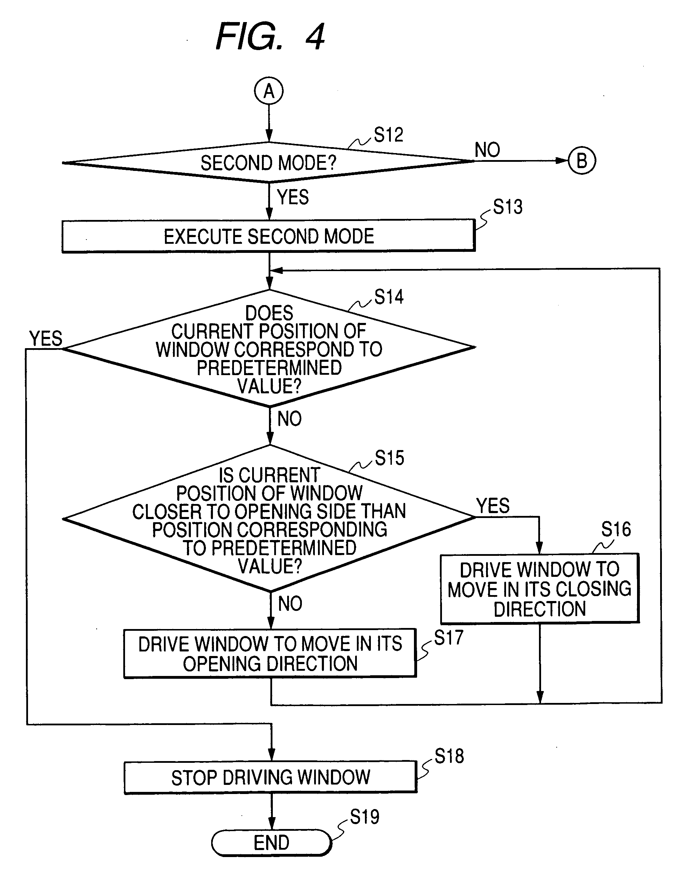

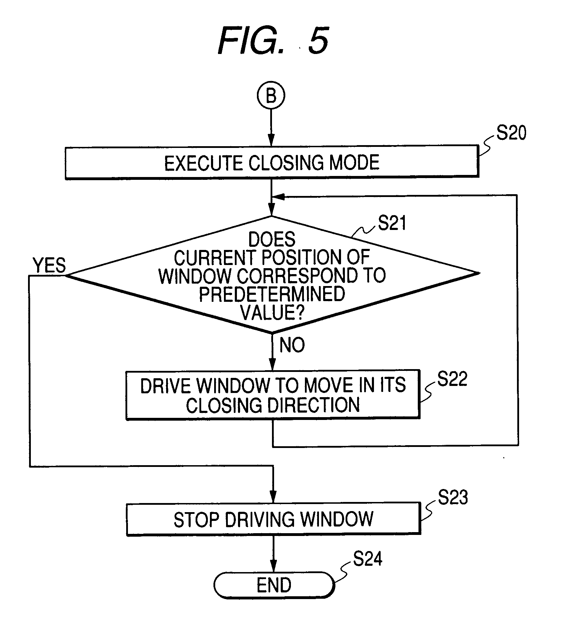

Hereinafter, preferred embodiments of the present invention will be described with reference to the accompanying drawings. Fig. 1 is a block diagram illustrating the construction of essential parts of a passive type keyless entry system according to an embodiment of the present invention; Fig. 2 is an explanatory view of a radio signal transmitted and received between a portable device and an onboard device, which are provided in the passive keyless entry system; Fig. 3 is a flowchart for explaining door lock control and a first mode operation of a window, in the passive keyless entry system; Fig. 4 is a flowchart for explaining a second mode operation of a window in the passive keyless entry system; and Fig. 5 is a flowchart for explaining a closing mode operation of a window in the passive keyless entry system.

As shown in Fig. 1, a passive keyless entry system according to the present embodiment comprises an onboard device 1 mounted on a vehicle, and a portable device 2 which performs radio communication with the portable device 1. The onboard device 1 is mainly comprised of a transceiver 11 having an antenna 11a, a door lock mechanism 12 which performs locking/unlocking of a door, a power window mechanism 13 which performs opening/closing drive of a window, a door opening/closing detector 14 which detects a locked/unlocked state of the door, a window position detector 15 which detects the position of the window in its opening/closing direction, and an electronic control unit (ECU) 16 which controls the door lock mechanism 12 and the power window mechanism 13, respectively, on the basis of predetermined signals, and executes various kinds of control.

The transceiver 11 is connected to the ECU 16. The transceiver 11 is adapted to send out various signals received from the portable device 2 by the antenna 11a, to the ECU 16, or to transmit various signals generated in the ECU 16 to the portable device 2 by radio. Further, the door lock mechanism 12 and the power window mechanism 13 are connected to the ECU 16, and the door opening/closing detector 14 and the window position detector 15 are also connected to the ECU 16. The door opening/closing detector 14 and the window position detector 15 detect a door locked/unlocked state and the position of a window in its opening/closing direction, in each of a driver-side door, a first-rear-side door which is located behind the driver-side door (hereinafter, referred to as a first-rear-side door), a front-passenger-side door and a second-rear-side door which is located behind the front-passenger-side door (hereinafter, referred to as a second-rear-side door), and output a detection signal for notifying the ECU 16 of the detection result. The door lock mechanism 12 has, as driving sources for performing the locking/unlocking operation of respective doors, a driver-side door lock motor 12a, a first-rear-side door lock motor 12b, a front-passenger-side door lock motor 12c, and a second-rear-side door lock motor 12d. The door lock mechanism 12 performs the locking/unlocking of the respective doors by respectively driving the door lock motors 12a to 12d according to locking/unlocking signals output from the ECU 16 on the basis of the detection signals from the door opening/closing detector 14. The power window mechanism 13 has, as driving sources for performing the opening/closing operation of respective windows, a driver-side power window motor 13a, a first-rear-side power window motor 13b, a front-passenger-side power window motor 13c, and a second-rear-side power window motor 13d. The power window mechanism 13 controls the movement of the respective windows to predetermined positions by respectively driving the power window motors 13a to 13d according to signals output from the ECU 16 on the basis of the detection signals from the window position detector 15. The ECU 16 has a central processing unit (CPU) (not shown), memories such as a read-only memory (ROM) and a random access memory (RAM), an interface circuit, etc. The ECU 16 executes the operation of those respective blocks on the basis of control programs previously stored in the memories.

The portable device 2 has a size such that it can be held and carried within a user's palm. The portable device 2 has therein a transmitting and receiving unit 21 having an antenna 21a, and a memory 22, and also has therein a CPU (not shown) that generates various signals to output them to a transmitting and receiving unit 21 or performs control or the like based on various signals received by the transmitting and receiving unit 21, an interface circuit, etc. The portable device 2 executes the operation of those respective blocks on the basis of control programs previously stored in the memory 22. Further, setting information for an opening/closing mode of a window is stored in the memory 22. The opening/closing mode consists of a closing mode in which a window is fully closed and an opening mode in which a window is left open with a predetermined gap. Further, the opening mode consists of a plurality of modes in which the gaps of a window are different from each other. In the present embodiment, the opening mode consists of a first mode and a second mode. The gap distance of a window in the first mode is set to a range of about 2 to 3 cm, and the gap distance of a window in the second mode is set to a range of about 7 to 8 cm. Also, predetermined signals including the setting information for the opening/closing mode are transmitted from the portable device 2 to the onboard device 1. A predetermined signal received by the transceiver 11 of the onboard device 1 is output to the ECU 16 from the transceiver 11, and the ECU 16 operates the power window mechanism 13 on the basis of the predetermined signal and controls the driving of a window to stop the window at a predetermined position thereof in its opening/closing direction on the basis of the above setting information. Further, the portable device 2 is provided with a mode selection switch 23 for selecting the above-mentioned closing mode, first mode and second mode of a window. The mode selection switch 23 has selection buttons 23a, 23b and 23c which are exposed to the surface of the portable device 2. When a user presses any one of the selection buttons 23a, 23b and 23c, the closing mode, the first mode and the second mode are respectively selected, and a signal corresponding to the selected opening/closing mode is output from the mode selection switch 23 to the CPU of the portable device 2. Then, the CPU changes the setting information in the memory 22 on the basis of the signal. Meanwhile, the selection buttons 23a, 23b and 23c are made of, for example, push-lock switches so that a user can easily identify whether any mode of the above-mentioned modes is set. However, a mode position may be switched to another mode position using one rotary switch.

Next, radio signals transmitted or received between the onboard device 1 and the portable device 2 will be described. As shown in Fig. 2, the radio signal are mainly comprised of a communication protocol A which allows the door lock mechanism 12 to perform unlocking operation, and a communication protocol B which allows the door lock mechanism 12 to perform locking operation and allows the power window mechanism 13 to perform window opening/closing operation based on the opening/closing mode.

The communication procedure A is executed, for example, when a user possessing the portable device 2 gets closer to a vehicle. Specifically, the portable device 2 continually issues a start signal for starting the onboard device 1. When the onboard device 1 receives a start signal a1 having electric field strength higher than a predetermined one, the onboard device 1 generates a request signal a2. The generated request signal a2 is transmitted from the onboard device 1 to the portable device 2. The portable device 2, which has received the request signal a2, generates an answer signal a3 including its distinctive ID and an unlocking command. The generated answer signal a3 is transmitted from the portable device 2 to the onboard device 1. When the onboard device 1 receives the answer signal a3, the ECU 16 compares whether or not the ID included in the answer signal a3 corresponds to any one of IDs that are previously registered in the ECU 16. If the compared IDs correspond to each other, the portable device 2 having the corresponding ID is authenticated. An unlocking signal is then output from the ECU 16 to the door lock mechanism 12. Then, the door lock mechanism 12, which has received the unlocking signal, performs unlocking operation of all the doors in their locked states. At this time, when the ECU 16 determines that all the doors are unlocked based on the detection signals from the door opening/closing detector 14, a confirmation signal a4 for notifying the completion of the unlocking of the doors is transmitted from the onboard device 1 to the portable device 2, thereby completing the communication protocol A. Meanwhile, if the portable device 2 does not receive the confirmation signal a4 within a predetermined time, the answer signal a3 is repeatedly transmitted from the portable device 2 to the onboard device 1, so that the unlocking of the doors is reliably completed.

The communication protocol B is executed, for example, when a user possessing the portable device 2 leaves from a vehicle. Specifically, when the onboard device 1 receives a start signal b1, which is sent from the portable device 2, having electric field strength lower than a predetermined one, the onboard device 1 generates a request signal b2. The generated request signal b2 is transmitted from the onboard device 1 to the portable device 2. The portable device 2, which has received the request signal b2, generates an answer signal b3 including its distinctive ID, a door locking command, and predetermined opening/closing mode information. The generated answer signal b3 is transmitted from the portable device 2 to the onboard device 1. When the onboard device 1 receives the answer signal b3, similar to the communication procedure A, the ECU 16 compares whether or not the ID included in the answer signal b3 corresponds to any one of IDs that are previously registered in the ECU 16. If the portable device 2 is authenticated, a locking signal is output from the ECU 16 to the door lock mechanism 12. Then, the door lock mechanism 12 to which the locking signal has been input, performs locking operation of all the doors in their unlocked states. When the ECU 16 determines that all the doors are locked on the basis on the detection signals from the door opening/closing detector 14, the ECU 16 operates the power window mechanism 13, and all the windows are stopped at their positions which are set in the opening/closing mode included in the answer signal b3. Thereafter, a confirmation signal b4 for notifying the completion of the door locking and the completion of positioning of the windows is transmitted from the onboard device 1 to the portable device 2, thereby completing the communication procedure B. Meanwhile, if the portable device 2 does not receive the confirmation signal b4 within a predetermined time, the answer signal b3 is repeatedly transmitted from the portable device 2 to the onboard device 1, so that the door locking and the window positioning can be reliably completed.

Next, in the keyless entry system constructed as above, the door locking operation and window positioning operation, which are performed on the vehicle side after the portable device 2 has been authenticated by the onboard device 1, will be described. Meanwhile, the keyless entry system according to the present embodiment is configured to sequentially perform the window positioning operation on all the windows. However, since the respective doors have all the same operation flows, only the window positioning operation of one door will now be described, and the description of the window positioning operation in the other doors will be omitted.

As shown in Fig. 3, when the onboard device 1. authenticates the portable device 2, the ECU 16 executes door lock control (Step S1). First, the ECU 16 determines whether all the doors are locked on the basis of the detection signals from the door opening/closing mechanism 14 (Step S2). If the determination result is YES, the next step is taken without performing the operation of the door lock mechanism 12 because all the doors are locked. On the other hand, if the determination result is NO in Step S2, the door lock mechanism 12 performs locking operation of a door in its unlocked state (Step S3). Thereafter, if the determination result is YES in Step S2 in a loop consisting of Steps S2 and S3 (i.e., if all the doors are locked), the next step is taken. When the locking of all the doors is completed in Steps S1 to S3, an operation flow for performing window positioning operation is executed from Step S4 on the basis of the setting information for the opening/closing mode, which is included in the answer signal b3.

First, a case in which the opening/closing mode is set to the first mode (the opening mode) will be described. In Step S4, it is determined whether the opening/closing mode is the first mode. If the opening/closing mode is any mode rather than the first mode, since the determination result is NO in Step S4, the next Step S12 as shown in Fig. 4 is taken. When the opening/closing mode is the first mode, the determination result is YES in Step S4. Then, the control of the power window mechanism 13 by the ECU 16 is executed to stop a window at its opening/closing position based on the information for the first mode (Step S5). Specifically, first, it is determined whether the current position of a window corresponds to a predetermined value (Step S6) . If the determination result is YES, the flow is completed without performing the operation of the power window mechanism 13 because all the windows stop at their predetermined positions (Step S11). Further, when the determination result is NO in Step S6, it is further determined whether the current position of the window is closer to the opening side than the position corresponding to the predetermined value (Step S7). If the determination result is YES, the window is driven to move in its closing direction (Step S8). Thereafter, a loop consisting of Steps S6, S7 and S8 is repeated. When the determination result is YES in Step S6 in the loop, i.e., when it is detected that the window is located at its predetermined position, the window driving stops (Step S10) and the process is then completed (S11). On the other hand, if the determination result is NO in Step S7 (i.e., if the current position of the window is closer to the closing side than the position corresponding to the predetermined value), the window is driven to move in its opening direction (Step S9). Thereafter, a loop consisting of Step S6, S7 and S9 is repeated. When the determination result is YES in Step S6 in the loop, i.e., when it is detected the window is located at its predetermined position, the window driving stops (Step S10), and the flow is then completed (Step S11). The first mode setting of a window is completed as above.

Next, the opening/closing mode set to the second mode (the opening mode) will be described. In the second mode, if the determination result is NO in Step S4 as shown in Fig. 3, Step S12 as shown in Fig. 4 is taken. In Step S12, it is determined that the opening/closing mode is the second mode. If the opening/closing mode is any mode other than the second mode, since the determination result is NO in Step S12, the next Step S20 as shown in Fig. 5 is taken. If the opening/closing mode is the second mode, the determination result is YES in Step S12. Then, the control of the power window mechanism 13 by the ECU 16 is executed to stop a window at its opening/closing position based on the information for the second mode (Step S13). Specifically, it is determined whether the current position of a window corresponds to a predetermined value (Step S14). If the determination result is YES, the flow is completed without performing the operation of the power window mechanism 13 because all the windows stop at their respective predetermined positions (Step S19). Further, when the determination result is NO in Step S14, it is further determined whether the current position of the window is closer to the opening side than the position corresponding to the predetermined value (Step S15). If the determination result is YES, the window is driven to move in its closing direction (Step S16). Thereafter, a loop consisting of Steps S14, S15 and S16 is repeated. When the determination result is YES in Step S14 in the loop, i.e., when it is detected that the window is located at its predetermined position, the window driving stops (Step S18) and the process is then completed (S19). On the other hand, if the determination result is NO in Step S15 (i.e., if the current position of the window is closer to the closing side than the position corresponding to the predetermined value), the window is driven to move in its opening direction (Step S17). Thereafter, a loop consisting of Step S14, S15 and S17 is repeated. When the determination result is YES in Step S14 in the loop, i.e., when it is detected that the window is located at its predetermined position, the window driving stops (Step S18), and the flow is then completed (Step S19). The second mode setting of a window is completed as above.

Next, the opening/closing mode set to the closing mode will be described. In the closing mode, since the determination result is NO in STEP S12 as shown in Fig. 4, the control of the power window mechanism 13 by the ECU 16 is executed to stop a window at its fully closed position (Step S20). Specifically, first, it is determined whether the current position of a window corresponds to a predetermined value (Step S21). If the determination result is YES, the process is completed without performing the operation of the power window mechanism 13 because all the windows stop at their respective predetermined positions (Step S24). Further, when the determination result is NO in Step S21, the window is driven to move in its closing direction (Step S22). Thereafter, a loop consisting of Steps S21 and S22 is repeated. When the determination result is YES in Step S21 in the loop, i.e., when it is detected that the window is located at its predetermined position, the window driving stops (Step S23) and the flow is then completed (S24). The closing mode setting of a window is completed as above.

As described above, in the passive keyless entry system according to the present embodiment, when a user possessing the portable device 2 leaves from a vehicle after the user presses the mode selection button 23b (first mode) or the mode selection button 23c (second mode) to set the opening/closing mode of a window to the opening mode, doors can be automatically locked, and windows can be automatically left open with a gap corresponding to that in the set opening mode. For example, even when the user parks his/her vehicle under the scorching sun in the summer, the ventilation in the vehicle room can be performed without the need to manually open the windows. This makes it possible to realize a passive keyless entry system with improved convenience, which can prevent the temperature inside the vehicle from getting exceedingly high. Further, when the ventilation is not needed, the user presses the mode selection switch 23a of the portable device 2 to select the closing mode, so that the windows can be set to be their fully closed states.

Further, the first mode in which the gap distance of a window is set to be a shorter width of 2 to 3 cm which does not permit a wrist to enter or the second mode in which the gap distance of a window is set to be a longer width of 5 to 7 cm can be selected as the opening mode. Thus, when a user intends to park his/her vehicle in a place where it is assumed that vehicle thefts occasionally occur, the first mode is selected, so that the ventilation in the vehicle room can be performed while the articles in the vehicle can be safe from theft. Further, when the user intends to park his/her vehicle in a place where vehicle thefts relatively rarely occur, the second mode is selected, the ventilation in the vehicle room can be more efficiently performed while maintaining an anti-theft effect is kept to a certain extent. Thus, it is possible to realize a passive keyless entry system with more improved convenience.

Meanwhile, in the present embodiment, the gap distance of a window in the first mode is set to a range of 2 to 3 cm, and the gap distance of a window is set to a range of 5 to 7 cm. However, the present invention is not limited to the set range, and appropriate modifications can be made thereto. Further, in the present embodiment, the opening mode comprises the first mode and the second mode. However, the present invention is not limited thereto, and the opening mode may comprise one mode or three or more modes.

Further, in the present embodiment, the memory 22 and the mode selection switch 23 are provided in the portable device 2 such that the portable device 2 changes the setting information for the opening/closing mode in the memory 22. However, a memory and a mode selection switch may be provided in the onboard device 1. In this case, a temperature sensor and a rainfall sensor may be further disposed. Accordingly, when the ambient temperature is lower than a predetermined temperature and the ventilation in the vehicle room is not needed, or when it rains, these circumstances are automatically detected, and the opening/closing mode of a window is automatically set to the closing mode. This construction makes it possible to realize a passive keyless entry system with more improved convenience.

Further, the present embodiment has been described concerning the operation of the opening/closing mode of a window. However, the present invention may be applied to an electrically driven type sunroof as well as the window. In this case, for example, a window and a sunroof are operated together in the opening mode, which results in an advantage in that the ventilation of inside of a vehicle room can be more efficiently performed.

Further, the present embodiment has been described concerning the passive keyless entry system of such type that a start signal is sent out from the portable device and a request signal is issued in response to the start signal. However, the present invention is applicable to a type of passive keyless entry system in which the start signal is omitted, a request signal is transmitted at a low frequency, and an answer signal is sent back at a high frequency. In this case, when the request signal received by the portable device becomes lower than a predetermined level of intensity, it is preferable that the window be located at a predetermined position.

Moreover, the present embodiment has been described with respect to the so-called passive type keyless entry system in which, when a user possessing a portable device leaves from a vehicle, the doors are locked. However, the present invention is applicable to a keyless entry system of such type that door locking is performed by the operation of a user possessing a portable device. In this case, it is preferable that windows be located at predetermined positions interlockingly with the locking operation.

## Claims

1. A keyless entry system comprising: an onboard device mounted on a vehicle, and a portable device which performs radio communication with the onboard device, the onboard device including a door lock mechanism which performs locking/unlocking of a door, a power window mechanism which performs opening/closing drive of a window, and control means for controlling the door lock mechanism and the power window mechanism,
wherein either the onboard device or the portable device includes memory means for storing setting information for an opening mode of the window in which the window is left open with a predetermined gap, and
wherein, on the basis of a predetermined signal from the portable device authenticated by the onboard device, the control means controls the door lock mechanism to be operated to lock the door, and controls the power window mechanism to be operated to drive and stop the window at its predetermined position based on the setting information stored in the memory.

2. The keyless entry system according to claim 1,
wherein setting information for a closing mode in which the window is fully closed is stored in the memory means, either the onboard device or the portable device has selection means for selecting either the opening mode or the closing mode, and the control means stops the window at its predetermined position based on the setting information for the mode selected by the selection means.

3. The keyless entry system according to claim 1 or 2,
wherein the opening mode has a plurality of modes in which the gap distances of the window are different from each other, and selection means for selecting any one of the plurality of modes is further included.
